# EUROPÄISCHE PATENTSCHRIFT

(11) **EP 2 598 954 B1**
(45) Veröffentlichungstag und Bekanntmachung des Hinweises auf die Patenterteilung: **22.01.2020**
(21) Anmeldenummer: 10739339.9
(22) Anmeldetag: 27.07.2010
(51) Int. Cl.: G05B 19/042, G05B 19/418, H02J 4/00

(54) **KONFIGURATION DER KOMMUNIKATIONSVERBINDUNGEN VON FELDGERÄTEN EINER ENERGIEAUTOMATISIERUNGSANLAGE**
CONFIGURATION OF THE COMMUNICATION LINKS OF FIELD DEVICES IN A POWER AUTOMATION INSTALLATION
CONFIGURATION DES LIAISONS DE COMMUNICATION DES APPAREILS DE TERRAIN D'UN ÉQUIPEMENT D'AUTOMATISATION DE LA DISTRIBUTION D'ÉNERGIE

(43) Veröffentlichungstag der Anmeldung: 05.06.2013
(73) Patentinhaber: Siemens Aktiengesellschaft, 80333 München (DE)
(72) Erfinder: JACHMANN, Thomas, Buffolo Grove 60089 (US); REICHENBACH, Gunther, 90559 Burgthann (DE); SCHUSTER, Norbert, 90584 Allersberg (DE)
(86) Internationale Anmeldenummer: PCT/EP2010/060892
(87) Internationale Veröffentlichungsnummer: WO 2012/013219

(56) Entgegenhaltungen:
- EP-A1- 2 096 512
- WO-A1-2006/128395
- WO-A1-2008/028874
- WO-A2-2010/037145

## Beschreibung

Die Erfindung bezieht sich auf ein Verfahren zum Konfigurieren von Kommunikationsverbindungen zwischen Feldgeräten einer Energieautomatisierungsanlage sowie eine Datenverarbeitungseinrichtung, mit der eine solche Konfigurierung durchgeführt werden kann.

Energieautomatisierungsanlagen dienen zur Automatisierung von elektrischen Energieversorgungsnetzen und umfassen üblicherweise sogenannte Feldgeräte, die in der Nähe von Primärkomponenten des elektrischen Energieversorgungsnetzes angeordnet sind. Solche Primärkomponenten können beispielsweise elektrische Kabel und Leitungen, Transformatoren, Generatoren, Motoren oder Umrichter sein. Üblicherweise nehmen die elektrischen Feldgeräte hierbei Messwerte auf, die den Betriebszustand der jeweiligen Primärkomponenten des elektrischen Energieversorgungsnetzes beschreiben. Diese Messwerte können entweder gespeichert oder an dem jeweiligen Feldgerät übergeordnete Steuer- und Überwachungskomponenten der Energieautomatisierungsanlage weitergeleitet werden. Außerdem können als sogenannte "Schutzgeräte" ausgeführte Feldgeräte dazu eingerichtet sein, anhand spezieller Algorithmen die aufgenommenen Messwerte dahingehend zu überprüfen, ob sie einen zulässigen oder einen unzulässigen Betriebszustand der jeweiligen Primärkomponente des elektrischen Energieversorgungsnetzes kennzeichnen. Im Falle eines unzulässigen Betriebszustandes werden geeignete Maßnahmen ausgelöst (z.B. das Öffnen eines Leistungsschalters), um die Primärkomponente vor Beschädigung oder Personen vor Verletzungen zu schützen. Bei einem unzulässigen Betriebszustand kann es sich beispielsweise um einen Kurzschluss auf einer Leitung des elektrischen Energieversorgungsnetzes handeln.

Ein Beispiel eines Verfahrens zum Konfigurieren von Feldgeräten einer technischen Anlage in Form einer Kraftwerksanlage ist aus der EP 2 096 512 A1 bekannt.

Die Feldgeräte einer Energieautomatisierungsanlage sind üblicherweise nicht nur mit hierarchisch übergeordneten Steuer- und Überwachungsgeräten verbunden, sondern weisen auch untereinander Kommunikationsverbindungen zur sogenannten "Querkommunikation" auf, um in kürzest möglicher Zeit, d.h. möglichst in "Echtzeit", Daten und Befehle miteinander austauschen zu können, die eine geeignete Reaktion auf den jeweils erkannten Betriebszustand der jeweiligen Primärkomponente ermöglichen.

Bei einer solchen Querkommunikation können beispielsweise Informationen über einen erkannten unzulässigen Betriebszustand oder Befehle zum Auslösen eines von dem empfangenden Feldgerät kontrollierten Leistungsschalters (ein sogenanntes "Mitnahmesignal") bzw. zum Blockieren eines von dem empfangenden Feldgerät kontrollierten Leistungsschalters (ein sogenanntes "Blockiersignal" oder "Verriegelungssignal") übermittelt werden.

In herkömmlichen Energieautomatisierungsanlagen für elektrische Energieversorgungsnetze waren hierzu die einzelnen Feldgeräte mittels analog oder digital arbeitender Ein- bzw. Ausgänge über eine Festverdrahtung miteinander verbunden, das heißt über separat zwischen den einzelnen Feldgeräten verlegte elektrische Leitungen. Dies erforderte einen hohen Verdrahtungsaufwand.

Bei jüngeren Energieautomatisierungsanlagen ist man daher dazu übergegangen, die einzelnen Feldgeräte der Energieautomatisierungsanlage an ein gemeinsames Kommunikationsnetz, wie beispielsweise ein Ethernet-Kommunikationsnetz, anzuschließen und die jeweiligen Daten und Befehle zwischen den Feldgeräten in Form von Datentelegrammen auszutauschen. Ein solcher Aufbau ist beispielsweise aus dem die Kommunikation in Energieautomatisierungsanlagen regelnden Standard "IEC 61850" der "International Electrotechnical Commission" bekannt. Die IEC 61850 ist der aktuell und zukünftig maßgebliche Kommunikationsstandard im Bereich der Energieautomatisierung. Gemäß dem Standard werden unter anderem sogenannte "GOOSE-Datentelegramme" (GOOSE = Generic Object Oriented Substation Events) beschrieben, die eine Querkommunikation zwischen den einzelnen Feldgeräten ermöglichen, um besonders schnell und effizient Daten und Befehle direkt zwischen den einzelnen Feldgeräten der Energieautomatisierungsanlage auszutauschen.

Entsprechend der Verlegung und der elektrischen Verschaltung von separaten Festverdrahtungen bei herkömmlichen Energieautomatisierungsanlagen, müssen auch bei der Einrichtung, der Inbetriebsetzung oder Veränderung der einer modernen Energieautomatisierungsanlage, die zur Querkommunikation zwischen den Feldgeräten Datentelegramme versendet, die einzelnen Kommunikationsverbindungen in den jeweiligen Feldgeräten - und ggf. auch einem übergeordneten Leitgerät - eingerichtet bzw. konfiguriert werden. Die Konfigurierung solcher Kommunikationsverbindungen umfasst z.B. die Festlegung von Sendern und Empfängern einzelner Datentelegramme, die Einstellung von für die Kommunikation zu verwendenden Adressen und die Festlegung der Reaktionen des Empfängers auf den Empfang eines bestimmten Datentelegramms.

Diese Konfigurierung erfolgt heutzutage üblicherweise mittels eines sogenannten Systemkonfigurators. Ein Systemkonfigurator ist ein eigenständiges Softwareprogramm, das es ermöglicht, übergreifend für die Energieautomatisierungsanlage Einstellungen für Datentelegramme, z.B. GOOSE-Nachrichten, in Form von sogenannten "Datasets" zu bündeln. Die in den Datasets festgelegten Einstellungen sollen für die Querkommunikation zwischen den Feldgeräten verwendet werden. In ihnen werden Quelle und Ziel der einzelnen Datentelegramme definiert. Hierzu muss der Benutzer eines Systemkonfigurators auf manuelle Weise viele verschiedene Informationen miteinander verknüpfen und daraus Einstellungen sowohl für die einzelnen Feldgeräte als auch für weitere übergeordnete Leitgeräte der Energieautomatisierungsanlage erzeugen.

Neben der hohen Anzahl an vom Benutzer der Energieautomatisierungsanlage durchzuführenden Aktionen ist ein wesentlicher Nachteil dieser manuellen Konfigurierung vor allem auch in der Tatsache zu sehen, dass der Benutzer selbst bei vergleichsweise einfachen Anwendungsfällen weitgehende Kenntnisse des für die Kommunikationseinstellungen maßgeblichen Regelwerkes, im Falle von GOOSE-Nachrichten also der IEC 61850, benötigt. Die manuellen Einstellungen sind mit einem hohen Fehlerrisiko verbunden, die nachträgliche Suche nach solchen Fehlern ist sehr aufwändig.

Der Erfindung liegt daher die Aufgabe zugrunde, ein Verfahren zur Konfigurierung von Kommunikationsverbindungen von Feldgeräten einer Energieautomatisierungsanlage anzugeben, bei dem ein Benutzer der Energieautomatisierungsanlage auch ohne weitgehende Kenntnisse eines für die Kommunikation maßgeblichen Regelwerkes mit hoher Sicherheit gegen Fehleinstellungen Konfigurationen vornehmen kann.

Zur Lösung dieser Aufgabe wird ein Verfahren zum Konfigurieren von Kommunikationsverbindungen zwischen Feldgeräten einer Energieautomatisierungsanlage vorgeschlagen, bei dem ein grafischer Editor mittels einer Datenverarbeitungseinrichtung ausgeführt wird, wobei der Editor einen ersten Anzeigebereich aufweist, wobei der erste Anzeigebereich eine grafische Darstellung von Funktionen eines ersten Feldgerätes der Energieautomatisierungsanlage umfasst; und wobei der Editor weiterhin einen zweiten Anzeigebereich aufweist, wobei der zweite Anzeigebereich eine grafische Darstellung von zumindest einem weiteren Feldgerät der Energieautomatisierungsanlage umfasst, und wobei der zweite Anzeigebereich eine Angabe von solchen Ausgangssignalen, die von dem zumindest einen weiteren Feldgerät während seines Betriebs erzeugt werden können, umfasst; und wobei das zumindest eine weitere Feldgerät mit dem ersten Feldgerät über ein physikalisches Kommunikationsmedium verbunden ist. Es wird eine benutzerseitige Auswahl einerseits eines Ausgangssignals des zumindest einen weiteren Feldgerätes in dem zweiten Anzeigebereich und andererseits eine benutzerseitige Auswahl einer Funktion des ersten Feldgerätes in dem ersten Anzeigebereich erfasst und ein erster Parametersatz für das erste und zumindest ein weiter Parametersatz für das zumindest eine weitere Feldgerät erzeugt, wobei die Parametersätze Anweisungen zur Konfigurierung der Kommunikationsverbindung des ersten und des zumindest einen weiteren Feldgerätes umfassen, wobei die Anweisungen eine Festlegung von Sender und Empfänger eines Datentelegramms, eine Einstellung von für die Kommunikation des Datentelegramms zu verwendenden Adressen und eine Festlegung einer Reaktion des das Datentelegramm empfangenden Feldgerätes auf den Empfang des Datentelegramms umfassen, und und wobei die Anweisungen im Betrieb der Feldgeräte und bei vorliegendem ausgewählten Ausgangssignal des zumindest einen weiteren Feldgerätes das zumindest eine weitere Feldgerät zum Versand eines Datentelegramms an das erste Feldgerät veranlassen und wobei die Anweisungen im Betrieb der Feldgeräte das erste Feldgerät zur Auslösung der ausgewählten Funktion bei Empfang des von dem zumindest einen weiteren Feldgerätes versendeten Datentelegramms veranlassen und wobei die Datentelegramme als GOOSE-Nachrichten gemäß dem Standard IEC 61850 ausgeführt sind.

Auf diese Weise kann der Benutzer der Energieautomatisierungsanlage ohne technische Schwierigkeiten eine Kommunikationsverbindung zwischen den Feldgeräten einrichten, ohne hierzu weitgehende Kenntnisse des zugrunde liegenden Regelwerkes besitzen zu müssen. Als Ergebnis der in dem Editor durchgeführten Aktionen werden automatisch die für die Umsetzung der Kommunikationsverbindung notwendigen Parametersätze für die beteiligten Feldgeräte erzeugt. Das Erzeugen der benötigten Parametersätze kann folglich in einem gemeinsamen Schritt erfolgen. Der Benutzer der Energieautomatisierungsanlage kann zudem ohne Wechsel zwischen verschiedenen Werkzeugen und direkt auf der Ebene der beteiligten Feldgeräte die Querkommunikation konfigurieren.

Konkret ist dabei vorgesehen, dass die Datentelegramme als GOOSE-Nachrichten gemäß dem Standard IEC 61850 ausgeführt sind.

Eine vorteilhafte Ausführungsform des erfindungsgemäßen Verfahrens sieht vor, dass das erste und das zumindest eine weitere Feldgerät Feldgeräte einer Energieautomatisierungsanlage sind, deren Aufbau und Funktion mittels einer Anlagenbeschreibungsdatei beschrieben wird, und die Parametersätze auch zur Anpassung der Anlagenbeschreibungsdatei verwendet werden.

Eine solche Anlagenbeschreibungsdatei kann beispielsweise auf Systemebene in den Feldgeräten der Energieautomatisierungsanlage übergeordneten Leitstellengeräten verwendet werden und dort Feldgeräte-übergreifende Funktionen der Energieautomatisierungsanlage (z.B. die Kommunikation zwischen den Felgeräten) festlegen. Zum konsistenten Betrieb der Energieautomatisierungsanlage müssen Einstellungen in den Parametersätzen und der Anlagenbeschreibungsdatei inhaltlich übereinstimmen. Mit der beschriebenen Ausführungsform werden die Parametersätze außer zur Einstellung der Feldgeräte auch zur automatischen Anpassung der Anlagenbeschreibungsdatei verwendet, so dass die Konsistenz der Einstellungen sichergestellt ist.

In diesem Zusammenhang kann außerdem vorteilhaft vorgesehen sein, dass die Anlagenbeschreibungsdatei die zu der Energieautomatisierungsanlage gehörenden Feldgeräte angibt und zur Erzeugung des zweiten Anzeigebereichs diejenigen von der Anlagenbeschreibungsdatei umfassten weiteren Feldgeräte ermittelt werden, welche über ein physikalisches Kommunikationsmedium mit dem ersten Feldgerät verbunden sind, und die ermittelten weiteren Feldgeräte in den zweiten Anzeigebereich aufgenommen werden.

Auf diese Weise können automatisch durch bloße Kenntnis der gemäß der Anlagenbeschreibungsdatei miteinander über das Kommunikationsmedium in Verbindung stehenden Feldgeräte in dem zweiten Auswahlbereich des Editors die zur Verfügung stehenden Auswahlmöglichkeiten erzeugt werden, ohne dass hierfür weitere manuelle Einstellungen notwendig wären.

Konkret kann in diesem Zusammenhang vorgesehen sein, dass die Anlagenbeschreibungsdatei eine SCD-Datei (SCD = "Substation Configuration Description") gemäß dem Standard IEC 61850 ist.

Alternativ zur Erzeugung des Inhalts des zweiten Anzeigebereichs aus einer Anlagenbeschreibungsdatei kann auch vorgesehen sein, dass zur Erzeugung des zweiten Anzeigebereichs eine Überprüfung durchgeführt wird, welche weiteren Feldgeräte über ein physikalisches Kommunikationsmedium mit dem ersten Feldgerät verbunden sind, und die bei der Überprüfung erkannten weiteren Feldgeräte in den zweiten Anzeigebereich aufgenommen werden.

Auf diese Weise werden nur die tatsächlich über das physikalische Kommunikationsmedium mit dem ersten Feldgerät in Kontakt stehenden weiteren Feldgeräte für die Erzeugung des zweiten Auswahlbereiches berücksichtigt.

Eine weitere vorteilhafte Ausführungsform des erfindungsgemäßen Verfahrens sieht vor, dass die Datenverarbeitungseinrichtung Bestandteil des ersten Feldgerätes ist.

Auf diese Weise können die benötigten Parametersätze direkt in dem ersten Feldgerät erzeugt werden, das zur Ausführung des Editors über eine von dem Benutzer bedienbare grafische Benutzerschnittstelle verfügen muss. Der Parametersatz für das erste Feldgerät kann direkt im ersten Feldgerät verwendet werden, während der Parametersatz des zumindest einen weiteren Feldgerätes an dieses übertragen werden muss.

Alternativ dazu kann jedoch auch vorgesehen sein, dass die Datenverarbeitungseinrichtung ein Konfigurationsrechner ist, der zur Ausführung eines Konfigurationsprogramms eingerichtet ist.

Bei dieser Ausführungsform wird ein Konfigurationsrechner in Form eines PCs oder eines Laptops, auf dem eine Konfigurationssoftware, z.B. das Konfigurationsprogramm "DIGSI" der Siemens AG installiert ist, zur Ausführung des grafischen Editors und zur Ermittlung der Parametersätze verwendet. Üblicherweise wird das Arbeiten an einem solchen Konfigurationsrechner aufgrund von größeren Bildschirmanzeigen und leichter bedienbaren Eingabegeräten (Tastatur, Maus) für den Benutzer komfortabler sein. Die ermittelten Parametersätze müssen in diesem Fall an alle beteiligten Feldgeräte übertragen werden.

Eine weitere vorteilhafte Ausführungsform sieht ferner vor, dass die Feldgeräte einstellbare Kommunikationseinrichtungen aufweisen und der erste Parametersatz an das erste und der zumindest eine weitere Parametersatz an das zumindest eine weitere Feldgerät übertragen werden und die Feldgeräte ihre jeweiligen Kommunikationseinrichtungen entsprechend der in den Parametersätzen enthaltenen Anweisungen einstellen.

Die oben genannte Aufgabe wird auch durch eine Energieautomatisierungsanlage mit konfigurierbaren Feldgeräten, einem physikalischen Kommunikationsmedium zwischen zumindest einigen der Feldgeräte und einer Datenverarbeitungseinrichtung gelöst, wobei die Datenverarbeitungseinrichtung zur Konfigurierung der Kommunikation zwischen den zumindest einigen Feldgeräten unter Durchführung eines Verfahrens gemäß einem der Ansprüche 1 bis 8 eingerichtet ist.

Die Erfindung soll nachfolgend anhand eines Ausführungsbeispiels näher erläutert werden. Hierzu zeigen
- Figur 1: eine schematische Darstellung einer Energieautomatisierungsanlage mit mehreren Feldgeräten;
- Figur 2: ein schematisches Ablaufdiagramm eines Verfahrens zur Konfigurierung von Feldgeräten; und
- Figur 3: eine schematische Ansicht eines Ausführungsbeispiels eines grafischen Editors zur Konfigurierung von Feldgeräten.

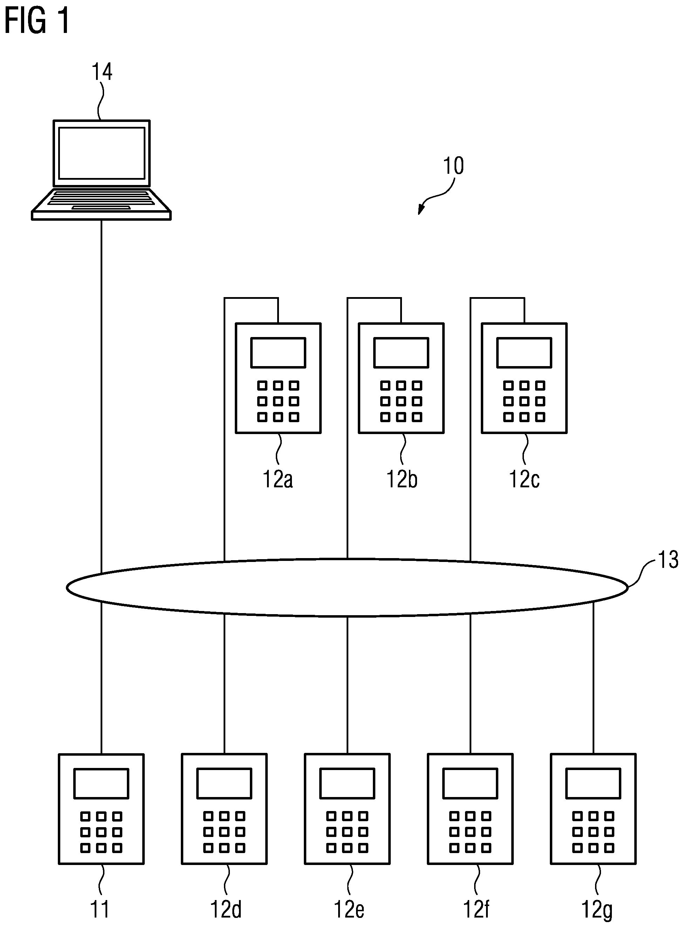

Figur 1 zeigt eine Energieautomatisierungsanlage 10 zur Steuerung und Überwachung eines in Figur 1 der Übersichtlichkeit halber nicht dargestellten elektrischen Energieversorgungsnetzes. Die Energieautomatisierungsanlage 10 weist ein erstes Feldgerät 11 auf, bei dem es sich beispielsweise um ein elektrisches Schutzgerät oder ein leittechnisches Gerät handelt. Solche und andere Feldgeräte zur Automatisierung von Energieversorgungsnetzen werden in der Fachsprache üblicherweise auch als sogenannte "IEDs" (IED = "Intelligent Electronic Device") bezeichnet. Im Folgenden soll der Begriff "Feldgerät" sowohl für Schutzgeräte, leittechnische Geräte, Messgeräte (RTUs) und weitere üblicherweise unter dem Begriff IED zusammengefasste Automatisierungsgeräte für Energieautomatisierungsanlagen verwendet werden.

Die Energieautomatisierungsanlage 10 umfasst ferner weitere Feldgeräte 12a bis 12g. Zum Austausch von Datentelegrammen untereinander weisen die Feldgeräte 11 sowie 12a bis 12g Kommunikationseinrichtungen mit Schnittstellen zu einem physikalischen Kommunikationsmedium in Form eines Kommunikationsnetzes 13 auf, bei dem es sich beispielsweise um ein Ethernet-Kommunikationsnetz handeln kann. Dabei kann das Kommunikationsnetz 13 beispielsweise in einer Stern- oder Ringtopologie aufgebaut sein; der konkrete Aufbau spielt für die Durchführung des im Folgenden beschriebenen Verfahrens keine Rolle. Ebenso kann das Kommunikationsnetz 13 kabelgebunden oder drahtlos aufgebaut sein. Die Feldgeräte 11 sowie 12a bis 12g steuern und/oder überwachen in Figur 1 nicht dargestellte Primärkomponenten des elektrischen Energieversorgungsnetzes.

Die Feldgeräte 11 sowie 12a bis 12g können ferner auch mit hierarchisch übergeordneten Steuer- und Überwachungsgeräten der Energieautomatisierungsanlage 10 wie beispielsweise einem Stationsüberwachungsgerät oder einer Netzleitstelle verbunden sein; solche Verbindungen sind in Figur 1 jedoch der besseren Übersichtlichkeit halber nicht dargestellt.

Über das Kommunikationsnetz 13 tauschen die Feldgeräte 11 sowie 12a bis 12g während des Betriebs der Energieautomatisierungsanlage 10 Datentelegramme aus, die Informationen enthalten, die innerhalb der Energieautomatisierungsanlage möglichst in Echtzeit (also ohne deutliche Verzögerung durch Übertragungs- und/oder Weiterverarbeitungsschritte) übermittelt werden sollen.

Bei in den Datentelegrammen enthaltenen Informationen kann es sich beispielsweise um Zustandsänderungen einer von dem jeweiligen Feldgerät 11 bzw. 12a bis 12g überwachten oder gesteuerten Primärkomponente des elektrischen Energieversorgungsnetzes handeln. Beispielsweise kann eine solche Zustandsänderung anzeigen, dass auf einem Leitungsabschnitt des elektrischen Energieversorgungsnetzes ein Kurzschluss aufgetreten ist. Die Datentelegramme können hierbei entweder bloße Informationen über den Zustandswechsel enthalten oder auch Befehle an andere Feldgeräte umfassen, die diese beispielsweise zum Öffnen, Schließen oder Blockieren eines Leistungsschalters veranlassen sollen.

Ist die Automatisierungsanlage gemäß dem Kommunikationsstandard IEC 61850 eingerichtet, so kann es sich bei den über das Kommunikationsnetz 13 übertragenen Datentelegrammen um sogenannte GOOSE-Datentelegramme bzw. GOOSE-Nachrichten handeln. Gemäß dem Standard IEC 61850 werden solche GOOSE-Nachrichten von einem Feldgerät in einem sogenannten Multicast- oder Broadcastverfahren gleichzeitig an alle oder einige ausgewählte Empfängerfeldgeräte versendet. Der Standard IEC 61850 sieht hierbei ein regelmäßiges Wiederholen der GOOSE-Datentelegramme vor, wobei die Wiederholungen bei kritischen Zustandsänderungen in höherer Frequenz erfolgen können. Hierdurch ist es möglich, den Zustand, der von den Feldgeräten 11 sowie 12a bis 12g überwachten Primärkomponenten ständig aktuell in der gesamten Automatisierungsanlage zu verteilen und Zustandsänderungen unter hohen Echtzeitbedingungen in der Automatisierungsanlage zu verbreiten.

Allerdings besitzen nicht alle möglichen Arten von in den Datentelegrammen enthaltenen Informationen Relevanz für alle übrigen Feldgeräte der Automatisierungsanlage, sodass bestimmten Datentelegrammen eines sendenden Feldgerätes der Automatisierungsanlage jeweils ein ausgewählter Empfängerkreis von weiteren Feldgeräten zugeordnet sein kann.

Da die korrekte Übertragung der zwischen den Feldgeräten übertragenen Datentelegramme von großer Wichtigkeit für das ordnungsgemäße Funktionieren der Energieautomatisierungsanlage ist, müssen die Kommunikationsverbindungen, über die die Datentelegramme übertragen werden, zumindest bei der Inbetriebsetzung der Energieautomatisierungsanlage sowie bei Änderungen an der Energieautomatisierungsanlage mit großer Sorgfalt konfiguriert werden. Hierbei sollen unter dem Begriff "Kommunikationsverbindung" insbesondere die jeweiligen Sende- und Empfangseinstellungen in den Feldgeräten 11 und 12a bis 12g verstanden werden, da diese Sende- und Empfangseinstellungen dafür zuständig sind, dass die Datentelegramme korrekt in das Kommunikationsnetz 13 übertragen werden, vom richtigen Empfängerkreis innerhalb der Feldgeräte 11 sowie 12a bis 12g empfangen werden und nach ihrem Empfang im jeweiligen Feldgerät die gewünschten Reaktionen veranlassen.

Zur Durchführung einer Konfigurierung der Kommunikationsverbindungen zwischen dem ersten Feldgerät 11 und zumindest einem weiteren Feldgerät 12a bis 12g wird eine Datenverarbeitungseinrichtung 14 eingesetzt, die in Figur 1 lediglich beispielhaft in Form eines ebenfalls mit dem Kommunikationsnetz 13 verbundenen Laptops wiedergegeben ist. Anstelle des Laptops kann eine solche Datenverarbeitungseinrichtung 14 auch durch andere geeignete separate Datenverarbeitungseinrichtungen (z.B. Desktop-PCs) gebildet werden oder auch Bestandteil eines der Feldgeräte 11 bzw. 12a bis 12g sein.

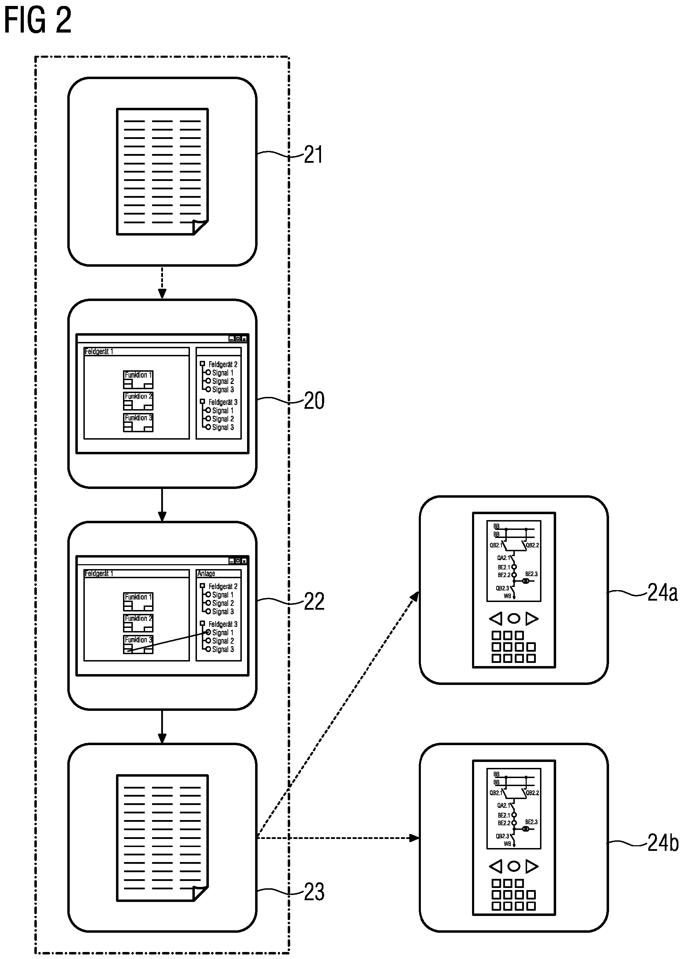

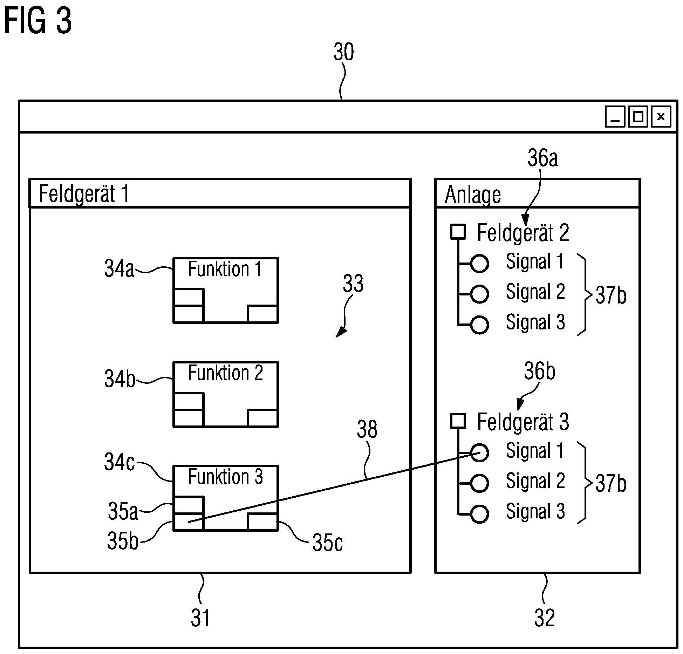

Im Folgenden soll unter Hinzunahme der Figuren 2 und 3 ein Ausführungsbeispiel eines Verfahrens zum Konfigurieren einer Kommunikationsverbindung zwischen dem ersten Feldgerät 11 und einem weiteren Feldgerät 12a näher erläutert werden. Dazu zeigt Figur 2 ein schematisches Ablaufdiagramm eines Ausführungsbeispiels eines Verfahrens zur Konfigurierung einer Kommunikationsverbindung zwischen den Feldgeräten 11 12a bis 12g. Es soll dabei davon ausgegangen werden, dass die Feldgeräte 11, 12a bis 12g und das Kommunikationsnetz 13 gemäß dem Standard IEC 61850 eingerichtet sind und daher zur Querkommunikation zwischen den Feldgeräten 11, 12a bis 12g Datentelegramme in Form von GOOSE-Nachrichten übermittelt werden. Konkret soll beispielhaft der Anwendungsfall betrachtet werden, dass ein von dem Feldgerät 12a erzeugtes Auslösesignal eine GOOSE-Nachricht veranlassen soll, die an das erste Feldgerät 11 übermittelt wird und dort eine Blockierung eines von dem ersten Feldgerät 11 selbst generierten Auslösesignals bewirken soll. Ein solches Szenario ist in Energieautomatisierungsanlagen durchaus üblich und wird beispielsweise eingesetzt, wenn mehrere Schutzgeräte einen Fehler auf einer Leitung des Energieversorgungsnetzes erkennen, aber nur das dem Fehler am nächsten liegende Schutzgerät (hier das Feldgerät 12a) tatsächlich auslösen soll.

Um eine solche Kommunikationsverbindung zu konfigurieren, führt die Datenverarbeitungseinrichtung 14 gemäß einem ersten Schritt 20 (vgl. Figur 2) einen grafischen Editor aus. Ein Ausführungsbeispiel eines solchen grafischen Editors 30 ist beispielhaft in Figur 3 wiedergegeben.

Der grafische Editor 30 weist einen ersten Auswahlbereich 31 sowie einen zweiten Auswahlbereich 32 auf. Der erste Auswahlbereich 31 umfasst eine grafische Darstellung von Funktionen des ersten Feldgerätes 11 der Energieautomatisierungsanlage 10. Diese Darstellung ist hier lediglich beispielhaft in Form eines Logikschemas 33 mit einzelnen Logikbausteinen 34a, 34b, 34c wiedergegeben. Der erste Anzeigebereich kann selbstverständlich abhängig von dem tatsächlichen Funktionsumfang des ersten Feldgerätes mehr oder weniger Funktionen darstellen; in Figur 3 wurden lediglich der Übersichtlichkeit halber nur drei solche Funktionen dargestellt. Ein Logikschema 33, wie es in Figur 3 gezeigt ist, ist auch als "CFC-Editor" bekannt und ermöglicht eine grafische Darstellung und Verknüpfung von einzelnen Logikbausteinen. Dabei stellt jeder Logikbaustein eine grundlegende Funktion des Feldgerätes 11 dar, die über Eingänge, z.B. Eingänge 35a und 35b des Logikbausteins 34c, und Ausgänge, z.B. den Ausgang 35c des Logikbausteins 34c, mit anderen Logikbausteinen verknüpft werden kann. Alternativ zu einer Darstellung des ersten Auswahlbereichs 31 in Form eines Logikschemas kann dieser beispielsweise auch als Signalrangiermatrix oder als Single-Line-Editor ausgestaltet sein.

Der zweite Auswahlbereich 32 des Editors 30 eine grafische Darstellung von mit dem ersten Feldgerät 11 (vgl. Figur 1) über ein physikalisches Kommunikationsmedium in Form des Kommunikationsnetzes 13 verbundenen weiteren Feldgeräten 12a bis 12g und eine Angabe von möglichen Ausgangssignalen, die von den weiteren Feldgeräten während ihres Betriebs erzeugt werden können. Lediglich beispielhaft sind in Figur 3 in dem zweiten Auswahlbereich 32 in einer Baumstruktur grafische Darstellungen 36a und 36b zweier weiterer Feldgeräte gezeigt, die jeweils Angaben 37a und 37b über die möglichen Ausgangssignale dieser weiteren Feldgeräte umfassen. Der zweite Auswahlbereich 32 kann selbstverständlich über die Darstellung in Figur 3 hinaus weitere Einträge aufweisen, diese sind in dem hier gezeigten Ausführungsbeispiel jedoch der Übersichtlichkeit halber fortgelassen worden.

Der zweite Auswahlbereich 32 stellt folglich eine Übersicht derjenigen weiteren Feldgeräte 12a bis 12g dar, die mit dem ersten Feldgerät 11 der Energieautomatisierungsanlage 10 über das Kommunikationsnetz 13 verbunden sind. Die möglichen Ausgangssignale dieser weiteren Feldgeräte stehen folglich für die Funktionen des ersten Feldgerätes zur Verfügung, so dass diesbezüglich GOOSE-Nachrichten konfiguriert werden können. Zur Erzeugung des zweiten Auswahlbereiches kann beispielsweise der optionale Schritt 21 (vgl. Figur 2) durchgeführt werden, gemäß dem eine ohnehin zur Beschreibung der Funktion und des Aufbaus der Energieautomatisierungsanlage 10 vorliegende Anlagenbeschreibungsdatei dazu verwendet wird, die mit dem ersten Feldgerät 11 verbundenen weiteren Feldgeräte 12a bis 12g sowie eine Angabe über die von diesen erzeugbaren Ausgangssignale zu bestimmen. Im Falle einer gemäß dem Standard IEC 61850 eingerichteten Energieautomatisierungsanlage 10 ist eine solche Anlagenbeschreibungsdatei durch die sogenannte "SCD" ("Substation Configuration Description") gegeben. Eine solche SCD kann beispielsweise in einem den Feldgeräten 11, 12a bis 12g übergeordneten Leitgerät (in Figur 1 nicht dargestellt) und/oder in einem oder mehreren der Feldgeräte 11, 12a bis 12g selbst bereitgehalten werden.

Alternativ zu der Bestimmung der in dem zweiten Auswahlbereich 32 des Editors 30 darzustellenden weiteren Feldgeräte 12a bis 12g aus der Anlagenbeschreibungsdatei kann auch eine Abfrage der tatsächlich mit dem ersten Feldgerät 11 verbundenen weiteren Feldgeräte 12a bis 12g stattfinden, indem beispielsweise von der Datenverarbeitungseinrichtung 14 eine Broadcast-Nachricht erzeugt wird, die eine Identifizierungsaufforderung an die diese Nachricht empfangenden Feldgeräte 11, 12a bis 12g umfasst. Als Reaktion auf die Identifizierungsaufforderung senden die Feldgeräte 11, 12a bis 12g eine Identifikation (z.B. eine eindeutige Gerätenummer) sowie eine Angabe über die von ihnen erzeugbaren Ausgangssignale an die Datenverarbeitungseinrichtung 14 zurück. Diese Antworten der Feldgeräte 11, 12a bis 12g können von der Datenverarbeitungseinrichtung 14 zur Erzeugung des zweiten Auswahlbereichs 32 genutzt werden, wobei hierzu lediglich die Antworten der mit dem ersten Feldgerät 11 verbundenen weiteren Feldgeräte 12a bis 12g berücksichtigt werden.

Wenn anstelle der Datenverarbeitungseinrichtung 14 der Editor 30 von dem ersten Feldgerät 11 selbst ausgeführt wird, werden die beiden Alternativen zur Erzeugung des zweiten Auswahlfensters in entsprechender Weise direkt von dem ersten Feldgerät 11 selbst durchgeführt.

In einem weiteren Schritt 22 (vgl. Figur 2) werden sowohl eine benutzerseitige Auswahl eines Ausgangssignals eines weiteren Feldgerätes 12a bis 12g in dem zweiten Anzeigebereich 32 als auch eine benutzerseitige Auswahl einer Funktion des ersten Feldgerätes 11 in dem ersten Anzeigebereich 31 erfasst. Mit Bezug auf Figur 3 sei gemäß dem oben beschriebenen Anwendungsfall angenommen, dass es sich bei dem mit "Feldgerät 3" bezeichneten Feldgerät um die grafische Repräsentation 36b des weiteren Feldgerätes 12a handeln soll und die mit "Signal 1" bezeichnete Angabe 37b eines möglichen Ausgangssignals dieses weiteren Feldgerätes 12a ein Auslösesignal bezeichnen soll. Dieses Ausgangssignal soll nun mit einer Blockierfunktion (diese soll in Figur 3 durch den mit "Funktion 3" bezeichneten Logikbaustein 34c wiedergegeben sein) verknüpft werden. Dazu wählt der Benutzer des Editors 30 sowohl das "Signal 1" als auch einen Eingang 35b des Logikbausteins 34c aus und verknüpft diese. Beispielhaft ist diese Verknüpfung in Figur 3 mit einer Verknüpfungslinie 38 dargestellt.

Diese Benutzerauswahl wird gemäß dem Schritt 22 erfasst und gemäß Schritt 23 in einen ersten Parametersatz für das erste Feldgerät 11 und einen weiteren Parametersatz für das weitere Feldgerät 14a umgesetzt, wobei diese Parametersätze Anweisungen zur Konfigurierung der Kommunikationsverbindung des ersten Feldgerätes 11 und des weiteren Feldgerätes 12a umfassen, die bei im Falle eines Vorliegens des Ausgangssignals "Signal 1" des weiteren Feldgerätes 12a einen Versand einer GOOSE-Nachricht von dem weiteren Feldgerät 12a an das erste Feldgerät 11 und die Auslösung der ausgewählten Funktion "Funktion 3" des ersten Feldgerätes 11 bei Empfang des Datentelegramms durch das erste Feldgerät 11 angeben. Hierbei erfolgt ein automatisches Anlegen aller zum Versand und zum Empfang dieser GOOSE-Nachricht notwendigen Einstellungen sowohl in dem ersten Feldgerät 11 als auch in dem weiteren Feldgerät 12a, inklusive der Anlage eines entsprechenden Datasets im weiteren Feldgerät 12a. Außerdem werden die Eigenschaften der GOOSE-Nachricht, wie z.B. Adresseinstellungen und die durch die GOOSE-Nachricht auszulösende Reaktion, automatisch festgelegt. Hierbei kann entweder vorgesehen sein, dass die GOOSE-Nachricht von dem weiteren Feldgerät 12a unter Nutzung einer entsprechenden Empfängeradresse des ersten Feldgerätes 11 direkt an das erste Feldgerät 11 versendet wird, oder dass die GOOSE-Nachricht als Broadcast- bzw. Multicast-Nachricht im Kommunikationsnetz versendet wird und das erste Feldgerät derart eingestellt wird, dass es einen Empfang dieser GOOSE-Nachricht zulässt. Außerdem kann auch eine automatische Anpassung einer Anlagenbeschreibungsdatei vorgenommen werden, indem die nunmehr konfigurierte Kommunikationsverbindung dort eingetragen wird.

In abschließenden Schritten 24a und 24b werden der erste Parametersatz an das erste Feldgerät 11 und der zweite Parametersatz an das zweite Feldgerät 12a übermittelt. Dies kann z.B. über das Kommunikationsnetz 13 oder mittels eines Datenträgers erfolgen. Die Parametersätze werden von dem jeweiligen Feldgerät derart interpretiert, dass eine Einstellung ihrer jeweiligen Kommunikationseinrichtungen dahingehend erfolgt, dass die gewünschte Kommunikationsverbindung - also das Erzeugen einer GOOSE-Nachricht durch das weitere Feldgerät 12a im Falle des vorliegenden Auslösesignals ("Signal 1"), der Empfang der GOOSE-Nachricht durch das erste Feldgerät 11 und die Aktivierung des Blockiersignals "Funktion 3" des ersten Feldgerätes 11 - eingerichtet wird.

Neben den Einstellungen bezüglich dieser Kommunikationsverbindung können die Parametersätze natürlich auch Einstellungen zu weiteren Kommunikationsverbindungen und auch zu anderen Funktionen der jeweiligen Feldgeräte umfassen.

Durch das beschriebene Verfahren zur Konfigurierung von Feldgeräten wird die zur Anlegung von Kommunikationsverbindungen in herkömmlichen Energieautomatisierungsanlagen bisher notwendige Systemkonfiguration auf Systemebene auf die Ebene der Gerätekonfiguration verlagert und ermöglicht eine stark vereinfachte Konfigurierung der Querkommunikation zwischen den einzelnen Feldgeräten. Der Benutzer kann mit einem für ihn minimalen Aufwand einen hohen Nutzen erreichen und vermeidet dabei das Risiko, durch falsche manuelle Einstellungen fehlerhafte Konfigurierungen vorzunehmen, die sich im Betrieb der Feldgeräte negativ oder sogar sicherheitskritisch bemerkbar machen. Eine intensive Kenntnis der für die Kommunikationsverbindungen maßgeblichen Regelwerke, z.B. der Norm IEC 61850, ihrer Fachterminologie und den für die Konfigurierung zu verwendenden Elementen, ist hierbei nicht notwendig.

## Patentansprüche

1. Verfahren zum Konfigurieren von Kommunikationsverbindungen zwischen Feldgeräten (11, 12a - 12g) einer Energieautomatisierungsanlage (10), bei dem - ein grafischer Editor (30) mittels einer Datenverarbeitungseinrichtung (14) ausgeführt wird, wobei
- der Editor (30) einen ersten Anzeigebereich (31) aufweist, wobei der erste Anzeigebereich (31) eine grafische Darstellung (33) von Funktionen eines ersten Feldgerätes (11) der Energieautomatisierungsanlage (10) umfasst; und wobei
- der Editor (30) weiterhin einen zweiten Anzeigebereich (32) aufweist, wobei der zweite Anzeigebereich (32) eine grafische Darstellung (36a, 36b) von zumindest einem weiteren Feldgerät (12a-12g) der Energieautomatisierungsanlage (10) umfasst, und wobei der zweite Anzeigebereich (32) eine Angabe (37a, 37b) von solchen Ausgangssignalen, die von dem zumindest einen weiteren Feldgerät (12a-12g) während seines Betriebs erzeugt werden können, umfasst; und wobei
- das zumindest eine weitere Feldgerät mit dem ersten Feldgerät (11) über ein physikalisches Kommunikationsmedium (13) verbunden ist;
wobei bei dem Verfahren folgende weitere Schritte durchgeführt werden:
- Erfassen einer benutzerseitigen Auswahl eines Ausgangssignals des zumindest einen weiteren Feldgerätes (z.B. 12a) in dem zweiten Anzeigebereich (32) und Erfassen einer benutzerseitigen Auswahl einer Funktion des ersten Feldgerätes (11) in dem ersten Anzeigebereich (31);
- Erzeugen eines ersten Parametersatzes für das erste (11) und zumindest eines weiteren Parametersatzes für das zumindest eine weitere Feldgerät (z.B. 12a), wobei die Parametersätze Anweisungen zur Konfigurierung der Kommunikationsverbindung des ersten (11) und des zumindest einen weiteren Feldgerätes (z.B. 12a) umfassen, wobei die Anweisungen eine Festlegung von Sender und Empfänger eines Datentelegramms, eine Einstellung von für die Kommunikation des Datentelegramms zu verwendenden Adressen und eine Festlegung einer Reaktion des das Datentelegramm empfangenden Feldgerätes auf den Empfang des Datentelegramms umfassen, und wobei die Anweisungen im Betrieb der Feldgeräte und bei vorliegendem ausgewählten Ausgangssignal des zumindest einen weiteren Feldgerätes (z.B. 12a) das zumindest eine weitere Feldgerät (z.B. 12a) zum Versand eines Datentelegramms an das erste Feldgerät (11) veranlassen und wobei die Anweisungen im Betrieb der Feldgeräte das erste Feldgerät (11) zur Auslösung der ausgewählten Funktion bei Empfang des von dem zumindest einen weiteren Feldgerät versendeten Datentelegramms veranlassen und wobei die Datentelegramme als GOOSE-Nachrichten gemäß dem Standard IEC 61850 ausgeführt sind.

2. Verfahren nach dem vorangehenden Anspruch, **dadurch gekennzeichnet, dass**
- das erste (11) und das zumindest eine weitere Feldgerät (z.B. 12a) Feldgeräte einer Energieautomatisierungsanlage (10) sind, deren Aufbau und Funktion mittels einer Anlagenbeschreibungsdatei beschrieben wird; und
- die Parametersätze auch zur Anpassung der Anlagenbeschreibungsdatei verwendet werden.

3. Verfahren nach Anspruch 2,
**dadurch gekennzeichnet, dass**
- die Anlagenbeschreibungsdatei die zu der Energieautomatisierungsanlage (10) gehörenden Feldgeräte angibt (11, 12a-12g); und
- zur Erzeugung des zweiten Anzeigebereichs diejenigen von der Anlagenbeschreibungsdatei umfassten weiteren Feldgeräte (12a-12g) ermittelt werden, welche über ein physikalisches Kommunikationsmedium (13) mit dem ersten Feldgerät (11) verbunden sind, und die ermittelten weiteren Feldgeräte (12a-12g) in den zweiten Anzeigebereich (32) aufgenommen werden.

4. Verfahren nach einem der Ansprüche 2 oder 3,
**dadurch gekennzeichnet, dass**
- die Anlagenbeschreibungsdatei eine SCD-Datei gemäß dem Standard IEC 61850 ist.

5. Verfahren nach Anspruch 1 oder 2,
**dadurch gekennzeichnet, dass**
- zur Erzeugung des zweiten Anzeigebereichs (32) eine Überprüfung durchgeführt wird, welche weiteren Feldgeräte (12a-12g) über ein physikalisches Kommunikationsmedium (13) mit dem ersten Feldgerät (11) verbunden sind, und die bei der Überprüfung erkannten weiteren Feldgeräte (12a-12g) in den zweiten Anzeigebereich (32) aufgenommen werden.

6. Verfahren nach einem der vorangehenden Ansprüche,
**dadurch gekennzeichnet, dass**
- die Datenverarbeitungseinrichtung Bestandteil des ersten Feldgerätes (11) ist.

7. Verfahren nach einem der Ansprüche 1 bis 6,
**dadurch gekennzeichnet, dass**
- die Datenverarbeitungseinrichtung (14) ein Konfigurationsrechner ist, der zur Ausführung eines Konfigurationsprogramms eingerichtet ist.

8. Verfahren nach einem der vorangehenden Ansprüche,
**dadurch gekennzeichnet, dass**
- die Feldgeräte (11, 12a-12g) einstellbare Kommunikationseinrichtungen aufweisen; und
- der erste Parametersatz an das erste (11) und der zumindest eine weitere Parametersatz an das zumindest eine weitere Feldgerät (z.B. 12a) übertragen werden und die Feldgeräte ihre jeweiligen Kommunikationseinrichtungen entsprechend der in den Parametersätzen enthaltenen Anweisungen einstellen.

9. Energieautomatisierungsanlage (10) mit konfigurierbaren Feldgeräten (11, 12a-12g), einem physikalischen Kommunikationsmedium (13) zwischen zumindest einigen der Feldgeräte (11, 12a-12g) und einer Datenverarbeitungseinrichtung (14), die zur Konfigurierung der Kommunikation zwischen den zumindest einigen Feldgeräten (11, 12a-12g) unter Durchführung eines Verfahrens gemäß einem der Ansprüche 1 bis 8 eingerichtet ist.

## Claims

1. Method for configuring communication links between field devices (11, 12a - 12g) in a power automation installation (10), in which
- a graphical editor (30) is executed using a data processing device (14), wherein
- the editor (30) has a first display area (31), wherein the first display area (31) comprises a graphical representation (33) of functions of a first field device (11) in the power automation installation (10); and wherein
- the editor (30) furthermore has a second display area (32), wherein the second display area (32) comprises a graphical representation (36a, 36b) of at least one further field device (12a-12g) in the power automation installation (10), and wherein the second display area (32) comprises an indication (37a, 37b) of those output signals which can be produced by the at least one further field device (12a-12g) during the operation thereof; and wherein
- the at least one further field device is connected to the first field device (11) by means of a physical communication medium (13);
wherein the following further steps are performed in the method:
- a user selection of an output signal from the at least one further field device (e.g. 12a) in the second display area (32) and a user selection of a function of the first field device (11) in the first display area (31) are captured;
- a first parameter set for the first (11) and at least one further parameter set for the at least one further field device (e.g. 12a) are produced, wherein the parameter sets comprise instructions for configuring the communication link between the first (11) and the at least one further field device (e.g. 12a), wherein the instructions comprise a stipulation of the sender and receiver of a data telegram, a setting for addresses to be used for communicating the data telegram and a stipulation of a reaction by the field device receiving the data telegram to reception of the data telegram, and wherein, during operation of the field devices and when there is a selected output signal available from the at least one further field device (e.g. 12a), the instructions prompt the at least one further field device (e.g. 12a) to send a data telegram to the first field device (11), and wherein, during operation of the field devices, the instructions prompt the first field device (11) to trigger the selected function when the data telegram sent by the at least one further field device is received, and wherein the data telegrams are in the form of GOOSE messages based on the IEC 61850 standard.

2. Method according to the preceding claim, **characterized in that**
- the first (11) and the at least one further field device (e.g. 12a) are field devices in a power automation installation (10), the design and function of which are described using an installation description file; and
- the parameter sets are also used for customizing the installation description file.

3. Method according to Claim 2,
**characterized in that**
- the installation description file indicates the field devices (11, 12a-12g) which belong to the power automation installation (10); and
- the second display area is produced by ascertaining those further field devices (12a-12g) which the installation description file comprises which are connected to the first field device (11) by means of a physical communication medium (13) and including the ascertained further field devices (12a-12g) in the second display area (32).

4. Method according to either of Claims 2 or 3,
**characterized in that**
- the installation description file is an SCD file based on the IEC 61850 standard.

5. Method according to Claim 1 or 2,
**characterized in that**
- the second display area (32) is produced by performing a check to determine which further field devices (12a-12g) are connected to the first field device (11) by means of a physical communication medium (13) and including the further field devices (12a-12g) which are identified during the check in the second display area (32).

6. Method according to one of the preceding claims,
**characterized in that**
- the data processing device is part of the first field device (11).

7. Method according to one of Claims 1 to 6,
**characterized in that**
- the data processing device (14) is a configuration computer which is set up to execute a configuration program.

8. Method according to one of the preceding claims,
**characterized in that**
- the field devices (11, 12a-12g) have adjustable communication devices; and
- the first parameter set is transmitted to the first field device (11) and the at least one further parameter set is transmitted to the at least one further field device (e.g. 12a), and the field devices set their respective communication devices in line with the instructions which the parameter sets contain.

9. Power automation installation (10) having configurable field devices (11, 12a-12g), a physical communication medium (13) between at least a few of the field devices (11, 12a-12g) and a data processing device (14) which is set up to configure the communication between the at least a few field devices (11, 12a-12g) by performing a method according to one of Claims 1 to 8.

## Revendications

1. Procédé de configuration de liaisons de communication entre des appareils (11, 12a à 12g) sur site d'une installation (10) d'automatisation d'énergie, dans lequel on réalise un éditeur (30) graphique au moyen d'un dispositif (14) de traitement de données, dans lequel
- l'éditeur (30) a une première partie (31) d'affichage, la première partie (31) d'affichage comprenant une représentation (33) graphique de fonctions d'un premier appareil (11) sur site de l'installation (10) d'automatisation d'énergie et dans lequel
- l'éditeur (30) a, en outre, une deuxième partie (32) d'affichage, la deuxième partie (32) d'affichage comprenant une représentation (36a, 36b) graphique d'au moins un autre appareil (12a à 12g) sur site de l'installation (10) d'automatisation d'énergie, et dans lequel la deuxième partie (32) d'affichage comprend une indication (37a, 37b) de signaux de sortie, qui peuvent être produits par le au moins un autre appareil (12a à 12g) sur site pendant son fonctionnement et dans lequel
- le au moins un autre appareil sur site est relié au premier appareil (11) sur site par un support (13) de communication physique ;
dans lequel on effectue, dans le procédé, les autres stades suivants :
- détection d'une sélection de la part d'un utilisateur d'un signal de sortie du au moins un autre appareil (par exemple 12a) sur site dans la deuxième partie (32) d'affichage et détection d'une sélection de la part d'un utilisateur d'une fonction du premier appareil (11) sur site dans la première partie (31) d'affichage ;
- production d'un premier jeu de paramètres pour le premier appareil (11) sur site et d'au moins un autre jeu de paramètres pour le au moins un autre appareil (par exemple 12a) sur site, les jeux de paramètres comprenant des instructions de configuration de la liaison de communication du premier appareil (11) sur site et du au moins un autre appareil (par exemple 12a) sur site, les instructions comprenant une fixation d'un émetteur et d'un récepteur d'un télégramme de données, un établissement d'adresses à utiliser pour la communication du télégramme de données et une fixation d'une réaction de l'appareil sur site recevant le télégramme de données à la réception du télégramme de données, et dans lequel les instructions provoquent, lorsque les appareils sur site fonctionnent et en présence d'un signal de sortie sélectionné du au moins un autre appareil (par exemple 12a) sur site, que le au moins un autre appareil (par exemple 12a) sur site envoie un télégramme de données au premier appareil (11) sur site et les instructions faisant, lorsque les appareils sur site fonctionnent, que le premier appareil (11) sur site déclenche la fonction sélectionnée à la réception du télégramme de données envoyé par le au moins un autre appareil sur site et dans lequel les télégrammes de données sont réalisés sous la forme d'un message GOOSE suivant la norme IEC 61850.

2. Procédé suivant la revendication précédente,
**caractérisé en ce que**
- le premier appareil (11) sur site et le au moins un autre appareil (par exemple 12a) sur site sont des appareils sur site d'une installation (10) d'automatisation d'énergie, dont on décrit la structure et le fonctionnement au moyen d'un fichier de description d'installation et
- on utilise des jeux de paramètres également pour adapter le fichier de description d'installation.

3. Procédé suivant la revendication 2,
**caractérisé en ce que**
- le fichier de description de l'installation indique des appareils (11, 12a à 12g) sur site appartenant à l'installation (10) d'automatisation d'énergie et
- pour produire la deuxième partie d'affichage, on détermine les autres appareils (12a à 12g) sur site embrassés par le fichier d'inscription d'installation, qui sont reliés au premier appareil (11) sur site par un support (13) physique de communication, et on enregistre les autres appareils (12a à 12g) sur site déterminés dans la deuxième partie (32) d'affichage.

4. Procédé suivant l'une des revendications 2 ou 3,
**caractérisé en ce que**
- le fichier de description d'installation est un fichier SCD suivant la norme IEC 61850.

5. Procédé suivant la revendication 1 ou 2,
**caractérisé en ce que**
- pour produire la deuxième partie (32) d'affichage, on effectue un contrôle des autres appareils (12a à 12g) sur site, qui sont reliés au premier appareil (11) sur site, par un support (13) de communication physique, et on enregistre, dans la deuxième partie (32) d'affichage, les autres appareils (12a à 12g) sur site reconnus au contrôle.

6. Procédé suivant l'une des revendications précédentes,
**caractérisé en ce que**
- le dispositif de traitement de données fait partie du premier appareil (11) sur site.

7. Procédé suivant l'une des revendications 1 à 6,
**caractérisé en ce que**
- le dispositif (14) de traitement de données est un ordinateur de configuration conçu pour réaliser un programme de configuration.

8. Procédé suivant l'une des revendications précédentes,
**caractérisé en ce que**
- les appareils (11, 12a à 12g) sur site ont des dispositifs de communication réglables et
- on transmet le premier jeu de paramètres au premier appareil (11) sur site et le au moins un autre jeu de paramètres au au moins un autre appareil (par exemple 12a) sur site et les appareils sur site règlent leurs dispositifs de communication respectifs conformément aux instructions contenues dans les jeux de paramètres.

9. Installation (10) d'automatisation d'énergie ayant des appareils (11, 12a à 12g) sur site pouvant être configurés, un support (13) de communication physique entre au moins certains des appareils (11, 12a à 12g) sur site et un dispositif (14) de traitement des données, qui, pour la configuration de la communication entre au moins certains appareils (11, 12a à 12g) sur site, est conçu pour effectuer un procédé suivant l'une des revendications 1 à 8.
